(19) Europäisches Patentamt
European Patent Office
Office européen des brevets

(11) **EP 4 607 330 A1**

(12) **EUROPEAN PATENT APPLICATION**
published in accordance with Art. 153(4) EPC

(43) Date of publication:
**27.08.2025 Bulletin 2025/35**

(21) Application number: **22965522.0**

(22) Date of filing: **17.11.2022**

(51) International Patent Classification (IPC):
**G06F 3/06** (2006.01)

(52) Cooperative Patent Classification (CPC):
**G06F 3/06**

(86) International application number:
**PCT/CN2022/132539**

(87) International publication number:
**WO 2024/103339 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **YU, Jiaqiang
  Shenzhen, Guangdong 518129 (CN)**
• **DING, Tao
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **FUNCTION MIGRATION METHOD AND APPARATUS, AND INTELLIGENT DRIVING DEVICE**

(57)     A function migration method (400 or 500) and apparatus (900), and an intelligent driving device (100) are provided. The function migration apparatus (900) is disposed in a vehicle-mounted domain controller, and the vehicle-mounted domain controller includes a first zone and a second zone. The function migration apparatus (900) may generate first cross-domain call information, where the first cross-domain call information indicates call information of a first sub-function of a first function for a function and/or data in the second zone, and the first sub-function is located in the first zone (S401); and the function migration apparatus (900) stores the first cross-domain call information, where the stored first cross-domain call information is used to migrate the first sub-function from the first zone to the second zone (S402). The method may be applied to the intelligent driving device like an intelligent vehicle or an electric vehicle, to resolve problems that deployment is difficult to be changed due to large-granularity function migration, and data redundancy is caused by repeated deployment of a same function in a plurality of domains. This helps reduce complexity of function deployment of the domain controller, to improve efficiency of the function deployment.

FIG. 3(a)

**(Cont. next page)**

| Zone 1 | Zone 2 |
|---|---|

**Zone 1**

**Function 1**

| Sub-function 1 | Sub-function 2 |

Cross-domain call →

**Zone 2**

**Function 1**

| Sub-function 3 | Sub-function 4 | Sub-function 5 |

305 — Cross-domain call control module

306 — Cache zone management module

Second cache module — 303

First cache module — 304

FIG. 3(b)

**Description**

**TECHNICAL FIELD**

This application relates to the field of intelligent driving, and more specifically, to a function migration method and apparatus, and an intelligent driving device.

**BACKGROUND**

In the field of intelligent vehicles, to improve reliability and security of an intelligent vehicle control system, a plurality of functions of a domain controller are usually deployed in different domains. For example, a function having a low function security requirement is deployed in a zone having a low security level (referred to as a common domain for short below), and a function having a high function security requirement is deployed in a zone having a high security level (referred to as a security domain for short below). However, in a development phase, to improve efficiency, all functions are debugged in a common domain, and then a function having a high security requirement is split from all the functions and migrated to a security domain.

A developer or a user may perform splitting and migration on a function based on a service requirement. Due to horizontal dependency between functions and downward dependency between some functions, during function migration, a function (referred to as a dependency function) that has a dependency relationship to the function may also need to be migrated to the security domain. However, some dependency functions cannot be called across domains. Therefore, these dependency functions need to be repeatedly deployed in both the security domain and common domain. If a granularity of the function splitting and migration is large, repeated function deployment may cause large data redundancy. In addition, after the function is migrated and deployed, if deployment of the function cannot meet a service requirement, costs of changing the deployment of the function are high.

In view of this, a function migration solution that facilitates changing of function deployment and can reduce data redundancy needs to be developed urgently.

**SUMMARY**

This application provides a function migration method and apparatus, and an intelligent driving device, to resolve problems that deployment is difficult to be changed due to large-granularity function migration, and data redundancy is caused by repeated deployment of a same function in a plurality of domains. This helps reduce complexity of function deployment of a domain controller, to improve efficiency of the function deployment.

The method provided in this application may be applied to the intelligent driving device. The intelligent driving device may be a vehicle in a broad sense, and may be a transportation means (like a commercial vehicle, a passenger vehicle, a truck, a motorcycle, an airplane flight vehicle, a train, or a ship), an industrial vehicle (like a pallet truck, a trailer, or a tractor), an engineering vehicle (like an excavator, a bulldozer, or a crane), an agricultural device (like a lawn mower or a harvester), an entertainment device, a toy vehicle, or the like. A type of the vehicle is not specifically limited in this application.

According to a first aspect, this application provides a function migration method. The method may be performed by a vehicle-mounted domain controller of a vehicle, or may be performed by a chip disposed in the vehicle-mounted domain controller. The vehicle-mounted domain controller includes a first zone and a second zone. The method includes: generating first cross-domain call information, where the first cross-domain call information indicates call information of a first sub-function for a function and/or data in the second zone, the first sub-function belongs to a first function, and the first sub-function is located in the first zone; and storing the first cross-domain call information, where the stored first cross-domain call information is used to migrate the first sub-function from the first zone to the second zone.

In the foregoing technical solution, function migration is performed at a small granularity, that is, a sub-function. This can avoid multi-domain deployment caused by migration of a function at a large granularity, and helps reduce data redundancy caused by the multi-domain deployment of a same function. In addition, when the stored first cross-domain call information is detected, it may be determined, based on the stored first cross-domain call information, to migrate the first sub-function, so that when an actual running status of the function deviates from a service requirement (for example, an actual security level of the function does not reach an expected security level) after the function is migrated and deployed, a user can determine a specific sub-function that causes the deviation without re-analysis based on the service requirement, to facilitate adjustment of function deployment (that is, further sub-function migration or sub-function re-migration). This helps reduce complexity and labor costs of function migration.

For example, the vehicle-mounted domain controller (sometimes referred to as a domain controller for short) in this application may include an electronic control unit (electronic control unit, ECU) of a vehicle, or may include a vehicle-mounted computing platform, for example, may include at least one of an advanced driving domain controller (advanced driving domain controller, ADC), a mobile data center (mobile data center, MDC), a vehicle domain controller (vehicle domain controller, VDC), and a chassis domain controller (chassis domain controller, CDC). Alternatively, the vehicle-mounted domain controller may further include another computing platform, for example, an in-car application-server (in-car application-server, ICAS) controller, a body domain controller (body domain controller, BDC), a special equipment system (special equipment system, SAS), a media graphics unit (media graphics unit, MGU), a body super core (body super core, BSC), or an ADAS super core (ADAS super core). This is not limited in this application. The ICAS may include at least one of the following: a vehicle control server ICAS 1, an intelligent driving server ICAS 2, an intelligent cockpit server ICAS 3, and an infotainment server ICAS 4.

For example, the storing the first cross-domain call information may include: controlling storing the first cross-domain call information. For example, a module that controls a sub-function in the vehicle-mounted domain controller to perform cross-domain call (for example, a cross-domain call control module) controls storing the first cross-domain call information; or a module that manages a cache zone in the vehicle-mounted domain controller (for example, a cache zone management module) controls storing the first cross-domain call information.

For example, the call information of the first sub-function for the function and/or the data in the second zone may include information indicating that cross-domain costs of the first sub-function are greater than or equal to a preset threshold.

For example, call of the first sub-function for the function in the second zone may include: call of a sub-function of the first function in the second zone, or may include call of another function deployed in the second zone; and call of the first sub-function for the data in the second zone may include call for cross-domain shared data in the second zone.

With reference to the first aspect, in some implementations of the first aspect, the generating first cross-domain call information includes: recording, in a first cache zone, cross-domain data of sub-functions in the first zone and the second zone; when cross-domain data of the first sub-function meets a specified service requirement, obtaining the cross-domain data of the first sub-function from the first cache zone; and generating the first cross-domain call information based on the cross-domain data of the first sub-function and information about a service accessed by the first sub-function.

In the foregoing technical solution, a cross-domain cache zone is set, and cross-domain call of a to-be-migrated function (or sub-function) and/or a migrated function (or sub-function) is implemented by using the cross-domain cache zone, so that a same function does not need to be separately deployed in a plurality of domains during function migration, to help reduce data redundancy caused by multi-domain deployment of the same function. Further, recording and analysis of cross-domain data are implemented based on the cross-domain cache zone, so that when cross-domain data of a function meets a specific condition, cross-domain call information may be generated to indicate the user or the vehicle-mounted domain controller to migrate the function. In addition, based on the foregoing solution, adaptive splitting of sub-functions can be implemented based on an actual service requirement (based on cross-domain data analysis), to reduce a workload caused by manual splitting.

With reference to the first aspect, in some implementations of the first aspect, the storing the first cross-domain call information includes: storing the first cross-domain call information in a second cache zone.

For example, the storing the first cross-domain call information may include: controlling storing the first cross-domain call information in the second cache zone.

In some possible implementations, the first zone and the second zone are zones with different security levels. For example, a security level of the first zone is higher than a security level of the second zone. If a sub-function in the first zone needs to frequently call a function and/or data in the second zone, when fast migration of the sub-function cannot be implemented due to a service requirement (for example, the sub-function requires a high security level), cross-domain call of the sub-function may be implemented by using the first cache zone, and this helps ensure overall performance of the first function. In addition, when cross-domain call information of the sub-function is stored in the second cache zone, it indicates that the sub-function can be migrated and needs to be migrated. In this case, the sub-function may be controlled to be migrated based on the cross-domain call information of the second cache zone. After the sub-function is migrated, the overall performance of the first function can be improved because cross-domain call pressure is reduced.

In the foregoing technical solution, the cross-domain call information stored in the second cache zone indicates migration of the sub-function. After the sub-function is migrated, the cross-domain call pressure of the sub-function in the first function is reduced. Therefore, the performance of the first function is improved while a security level or a security requirement of the first function is ensured.

In some possible implementations, for each sub-function having a cross-domain call requirement, cross-domain data of the sub-function is recorded in the first cache zone, and when the cross-domain data meets a corresponding specified service requirement of the sub-function, the cross-domain data is stored into the second cache zone. Further, the vehicle-mounted domain controller calculates cross-domain costs only for cross-domain data of a sub-function stored in the second cache zone, and when cross-domain costs corresponding to a sub-function (for example, the first sub-function) are greater than or equal to the preset threshold, cross-domain call information for the sub-function is generated, and the cross-domain call information is stored in the second cache zone.

In some possible implementations, after cross-domain data of a sub-function is stored into the second cache zone, the cross-domain data of the sub-function is deleted from the first cache zone.

In the foregoing technical solution, the first cache zone and the second cache zone are set, so that complex data streams generated in a cross-domain call process can be managed respectively. The first cache zone is used to store cross-domain data of all sub-functions that need to be called across domains, and the second cache zone is used to store cross-domain data of a sub-function that may need to be migrated, so that when determining the sub-function that needs to be migrated, the vehicle-mounted domain controller only needs to pay attention to whether the sub-function corresponding to the cross-domain data in the second cache zone need to be migrated (for example, calculate cross-domain costs of the corresponding sub-function based on the cross-domain data in the second cache zone), and does not need to determine one by one whether each sub-function of cross migration needs to be migrated. This helps reduce calculation complexity during function migration.

With reference to the first aspect, in some implementations of the first aspect, the cross-domain data of the first sub-function includes at least one of the following: a frequency, a delay tolerance, and a data amount of accessing the second zone by the first sub-function.

In the foregoing technical solution, because the cross-domain cache zone records the cross-domain data, the user can analyze, based on the cross-domain data, information such as a frequency and a data amount of accessing shared data by the sub-function, to further provide a reliable basis for the user to balance security and performance of the function.

With reference to the first aspect, in some implementations of the first aspect, before the generating first cross-domain call information, the method further includes: determining a first dependency relationship of the first function, where the first function includes M sub-functions, the M sub-functions include the first sub-function, the first dependency relationship indicates a call relationship between each of the M sub-functions and a second function, and the first function and the second function are deployed in the first zone, where the first dependency relationship is used to control N sub-functions in the M sub-functions to be migrated to the second zone, a security level of the second zone is higher than a security level of the first zone, M is an integer greater than 1, and N is an integer greater than or equal to 1.

In some possible implementations, a sub-function other than the N sub-functions in the M sub-functions includes the first sub-function. In this case, after the N sub-functions are migrated to the second zone based on the first dependency relationship, the first sub-function may need to call the function and/or the data in the second zone, and further, the first cross-domain call information may be generated.

In some possible implementations, the N sub-functions include the first sub-function. In this case, the first cross-domain call information may be generated when the first dependency relationship of the first function is determined.

In some possible implementations, the first dependency relationship is associated with a function migration scenario. For example, if the first dependency relationship indicates that a dependency relationship between some sub-functions having a low security level requirement and the first zone is complex, the function migration scenario may be: migrating the first function as a whole to the second zone, and then migrating the some sub-functions having a low security level requirement back to the first zone. For example, a sub-function other than the N sub-functions in the M sub-functions has a low security level requirement, and a dependency relationship between the sub-function and the first zone is complex. In this case, the function migration scenario may be: migrating the first function to the second zone, and then migrating the sub-function other than the N sub-functions in the M sub-functions back to the first zone.

In the foregoing technical solution, a dependency relationship of the to-be-migrated function can be determined, to indicate a specific scenario of function migration (that is, after the function is migrated as a whole, several sub-functions are migrated back to an initial deployment zone, or one or more sub-functions of the function are migrated from an initial deployment zone to a to-be-migrated-in zone).

It should be noted that, in this application, both the initial deployment zone and the to-be-migrated-in zone are for a state in which the first function does not perform function migration. In a process of migrating the first function, the to-be-migrated zone may be a zone into which one or more sub-functions of the first function are migrated.

With reference to the first aspect, in some implementations of the first aspect, the method further includes: migrating the first sub-function from the first zone to the second zone based on the first dependency relationship and the first cross-domain call information.

For example, the first sub-function is migrated from the first zone to the second zone based on the first cross-domain call information and a complexity level of a dependency relationship of the first sub-function indicated by the first dependency relationship. For example, the complexity level of the dependency relationship of the first sub-function may be determined based on at least one of the following: a complexity degree of a dependency relationship between the first sub-function and a function in the first zone, a complexity degree of a dependency relationship between the first sub-function and data in the first zone, a complexity degree of a dependency relationship between the first sub-function and a function in the second zone, a complexity degree of a dependency relationship between the first sub-function and data in the second zone, and a migration difficulty of the dependency function of the first sub-function. The complexity degree may be determined based on a quantity of horizontal dependency functions, a quantity of vertical dependency functions, and the like.

In some possible implementations, the foregoing complexity level may further be related to a service feature implemented by the first sub-function.

In the foregoing technical solution, migration of the first sub-function is controlled with reference to the first dependency relationship and the first cross-domain call information. This helps improve a degree of matching between an actual running status of the first function and a service requirement, to further reduce a quantity of times of function migration.

In some possible implementations, the first cache zone is generated based on a requirement of the first sub-function for calling the second zone in the first zone. In this case, the first cache zone may be deleted (or formatted) when the first sub-function is migrated from the first zone to the second zone.

With reference to the first aspect, in some implementations of the first aspect, the method further includes: marking a cross-domain call application programming interface and/or a cross-domain data access pointer of the first sub-function by using a keyword; and generating a scheduling function based on the keyword, where the scheduling function is used to adjust a behavior of accessing the second zone by the first sub-function.

In the foregoing technical solution, the first sub-function performs cross-domain scheduling by using the scheduling function, cross-domain migration (or deployment) of the function can be implemented, and code of the first sub-function can be isolated, so that the user does not need to manually change a cross-domain scheduling function of the first sub-function, to help reduce manual workload.

According to a second aspect, a function migration apparatus is provided. The apparatus is disposed in a vehicle-mounted domain controller, and the vehicle-mounted domain controller includes a first zone and a second zone. The apparatus includes a generation unit and a storage unit, where the generation unit is configured to generate first cross-domain call information, where the first cross-domain call information indicates call information of a first sub-function for a function and/or data in the second zone, the first sub-function belongs to a first function, and the first sub-function is located in the first zone; and the storage unit is configured to store the first cross-domain call information, where the stored first cross-domain call information is used to migrate the first sub-function from the first zone to the second zone.

With reference to the second aspect, in some implementations of the second aspect, the storage unit includes a first cache zone, and the apparatus further includes a recording unit; the recording unit is configured to record, in the first cache zone, cross-domain data of sub-functions in the first zone and the second zone; and the generation unit is configured to: when cross-domain data of the first sub-function meets a specified service requirement, obtain the cross-domain data of the first sub-function from the first cache zone, and generate the first cross-domain call information based on the cross-domain data of the first sub-function and information about a service accessed by the first sub-function.

With reference to the second aspect, in some implementations of the second aspect, the storage unit further includes a second cache zone, and the second cache zone is used to store the first cross-domain call information.

With reference to the second aspect, in some implementations of the second aspect, the cross-domain data of the first sub-function includes at least one of the following: a frequency, a delay tolerance, and a data amount of accessing the second zone by the first sub-function.

With reference to the second aspect, in some implementations of the second aspect, the apparatus further includes a determining unit, and the determining unit is configured to: determine a first dependency relationship of the first function, where the first function includes M sub-functions, the M sub-functions include the first sub-function, the first dependency relationship indicates a call relationship between each of the M sub-functions and a second function, and the first function and the second function are deployed in the first zone, where the first dependency relationship is used to control N sub-functions in the M sub-functions to be migrated to the second zone, a security level of the second zone is higher than a security level of the first zone, M is an integer greater than 1, and N is an integer greater than or equal to 1.

With reference to the second aspect, in some implementations of the second aspect, the apparatus further includes a migration unit, and the migration unit is configured to migrate the first sub-function from the first zone to the second zone based on the first dependency relationship and the first cross-domain call information.

With reference to the second aspect, in some implementations of the second aspect, the apparatus further includes a marking unit; the marking unit is configured to mark a cross-domain call application programming interface and/or a cross-domain data access pointer of the first sub-function by using a keyword; and the generation unit is further configured to generate a scheduling function based on the keyword, where the scheduling function is used to adjust a behavior of accessing the second zone by the first sub-function.

According to a third aspect, a function migration apparatus is provided, where the apparatus includes: a memory, configured to store a computer program; and a processor, configured to execute the computer program stored in the memory, to enable the apparatus to perform the method according to any possible implementations of the first aspect.

According to a fourth aspect, a domain controller is provided, where the domain controller includes the apparatus according to any possible implementations of the second aspect or the third aspect.

According to a fifth aspect, an intelligent driving device is provided, where the intelligent driving device includes the apparatus according to any possible implementations of the second aspect or the third aspect, or the domain controller according to any possible implementations of the fourth aspect.

With reference to the fifth aspect, in some implementations of the fifth aspect, the intelligent driving device is a vehicle.

According to a sixth aspect, a computer program product is provided, where the computer program product includes computer program code. When the computer program code is run on a computer, the computer is enabled to perform the method according to any possible implementations of the first aspect.

It should be noted that the computer program code may be completely or partially stored in a first storage medium. The first storage medium may be encapsulated with a processor, or encapsulated separately from a processor.

According to a seventh aspect, a computer-readable medium is provided, where the computer-readable medium stores instructions. When the instructions are executed by a processor, the processor is enabled to implement the method according to any possible implementations of the first aspect.

According to an eighth aspect, a chip is provided, where the chip includes a circuit. The circuit is configured to perform the method according to any possible implementations of the first aspect.

## BRIEF DESCRIPTION OF DRAWINGS

FIG. 1 is a diagram of a function migration scenario;

FIG. 2 is a functional block diagram of an intelligent driving device according to an embodiment of this application;

FIG. 3(a) and FIG. 3(b) are a diagram of a system framework required for function migration according to an embodiment of this application;

FIG. 4 is a schematic flowchart of a function migration method according to an embodiment of this application;

FIG. 5 is another schematic flowchart of a function migration method according to an embodiment of this application;

FIG. 6 is a diagram of an application scenario of a function migration method according to an embodiment of this application;

FIG. 7 is another diagram of an application scenario of a function migration method according to an embodiment of this application;

FIG. 8A and FIG. 8B are another diagram of an application scenario of a function migration method according to an embodiment of this application;

FIG. 9 is a block diagram of a function migration apparatus according to an embodiment of this application; and

FIG. 10 is another block diagram of a function migration apparatus according to an embodiment of this application.

## DESCRIPTION OF EMBODIMENTS

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, at least one means one or more, and a plurality of means two or more. At least one of the following items (pieces) or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

For ease of understanding solutions in embodiments of this application, concepts in this application are first described.

1. Function: The function may be understood as a function implemented through a software program. A software program may be divided into one or more function modules, each function module may complete a sub-function of the software program, and an entirety including the one or more function modules may implement the function of the entire software program. Function migration in this application may include migration of a software program and/or migration of one or more function modules in the software program.

For example, a vehicle-mounted domain controller is a vehicle path planning controller, and a function of the domain controller is a path planning function. In this application, the path planning function may be further divided into one or more sub-functions. For example, the path planning function may include one or more of a decision preprocessing sub-function, a prior preprocessing sub-function, a path generation sub-function, an obstacle processing sub-function, and a track generation sub-function. Function migration may be migrating the path planning function from a common domain to a security domain, or may be migrating the one or more sub-functions of the path planning function from the common domain to the security domain, or may be migrating the one or more sub-functions of the path planning function from the security domain to the common domain.

It should be noted that a plurality of sub-functions of one function may have different security level requirements. For example, for some sub-functions, a security level of the common domain may meet a security level requirement of the sub-functions, and for other sub-functions, a security level of the security domain is required to meet a security level requirement of the sub-functions. As a result, for the entire function, the security level of the security domain is needed to meet a security level requirement of the function.

2. Horizontal dependency: Horizontal dependency indicates that there is an interaction relationship (or referred to as a call relationship) between functions of a domain controller, or there is an interaction relationship between sub-functions of a function of the domain controller. Further, a function having a horizontal dependency on a to-be-migrated function is referred to as a horizontal dependency function.

3. Vertical dependency: If a function of a function needs to be called for implementation of a function and/or a sub-function of a domain controller, there is vertical dependency between the function corresponding to the function and the function and/or the sub-function of the domain controller. Further, a function having vertical dependency on a to-be-migrated function is referred to as a vertical dependency function.

4. Dependency relationship: The dependency relationship includes the horizontal dependency and/or the vertical dependency.

5. Service requirement: The service requirement is a condition required for implementing a function, for example, may include one or more of a security level requirement, a load balance requirement, and a delay performance requirement.

6. Cross-domain call: Call performed by a function (or sub-function) deployed in a first zone on a function (or sub-function) and/or data in a second zone, where the first zone and the second zone are different zones in a domain controller.

As described above, in the field of intelligent vehicles, to improve reliability and security of an intelligent vehicle control system, a multi-domain function deployment method is usually used. For example, a function having a low security requirement is deployed in a common domain, and a function having a high security requirement is deployed in a security domain. However, in a development phase, to improve efficiency, all functions are debugged in a common domain, and then a function having a high security requirement is split from all the functions and migrated to a security domain.

In the current technical background, for a small-scale function (for example, a function with a simple dependency relationship), a static dependency relationship of the function is analyzed. After the dependency relationship is determined, splitting is manually performed on a to-be-migrated function based on a security level requirement of the function and complexity of the dependency relationship. For a large-scale function, a dependency relationship of the function is identified through a hotspot path, and shared data access code on a part of the hotspot path is automatically generated by using a tool, to perform splitting on a to-be-migrated function. There is horizontal dependency between the function to be migrated and another function, and there is vertical dependency between functions and underlying hardware. As a result, when the function is migrated from the common domain to the security domain, a dependency function may also need to be migrated to the security domain. Some dependency functions cannot be called across domains. Therefore, during function migration, the dependency functions may need to be deployed in both the common domain and the security domain. In addition, after the function is migrated and deployed, an actual running status of the function may be different from a service requirement. Therefore, in a process of actual development and deployment of a function to mass production of a vehicle, the function deployment may need to be adjusted a plurality of times based on a degree of matching between an actual running status of the function and a service requirement. In other words, before the mass production of the vehicle, a plurality of function splitting and migration processes may need to be performed.

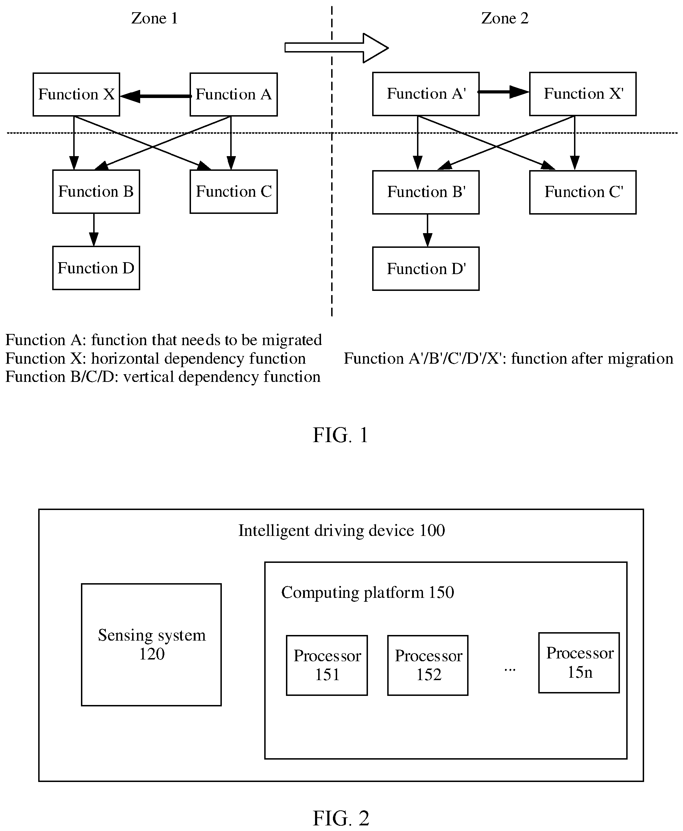

A function splitting and migration scenario shown in FIG. 1 is used as an example. A function A is a function that needs to be migrated, a function X is a function that has horizontal dependency on the function A, and functions B, C, or D is a function that has vertical dependency on the function A. In the current technical background, function splitting and migration steps are as follows:

    1. Determine a to-be-migrated function (that is, the function A) that needs to be migrated from a zone 1 to a zone 2.
    2. Determine a horizontal dependency function (that is, the function X) that has horizontal dependency on the to-be-migrated function, and perform horizontal splitting on the to-be-migrated function based on the horizontal dependency.
    3. Determine whether the horizontal dependency function supports cross-domain call, and if the cross-domain call is supported, modify call of the horizontal dependency function to the cross-domain call; or if the cross-domain call is not supported, remove a dependency relationship between the horizontal dependency function and the to-be-migrated function, or deploy the horizontal dependency function in both the zone 1 and the zone 2.

4. Determine a vertical dependency function (that is, the function B, C, or D) that has vertical dependency on the to-be-migrated function, and perform vertical splitting on the to-be-migrated function based on the vertical dependency.

5. Determine whether the vertical dependency function supports cross-domain call, and if the cross-domain call is supported, modify call of the vertical dependency function to the cross-domain call; or if the cross-domain call is not supported, remove a dependency relationship between the vertical dependency function and the to-be-migrated function, or deploy the vertical dependency function in both the zone 1 and the zone 2.

6. Migrate the to-be-migrated function to the zone 2, determine whether the to-be-migrated function still needs to be used in the zone 1, and if the to-be-migrated function still needs to be used in the zone 1, reserve the to-be-migrated function in the zone 1 as well.

If the function A, the function B, the function C, the function D, and the function X all cannot be called across domains, a set of functions needs to be deployed in both the zone 1 and the zone 2, the function A, the function B, the function C, the function D, and the function X are reserved in the zone 1, and a migrated function A', a migrated function B', a migrated function C', a migrated function D', and a migrated function X' are deployed in the zone 2. It should be understood that the function A', the function B', the function C', the function D', and the function X' are respectively the same as the function A, the function B, the function C, the function D, and the function X.

It can be learned that the foregoing technical solution has the following disadvantages: First, function splitting and migration are performed on a basis of a large-granularity function, that is, a path planning function, a sensing function, a convergence function, and the like are splitting and migration objects. During splitting, a plurality of splitting solutions coexist. As a result, after the function is migrated and deployed, an actual running status of the function may be different from a service requirement. In addition, when function running deviates from the service requirement, re-splitting and re-migration of the function consume labor costs, and lack reliable basis. Second, if the function needs to provide a service for two or more domains simultaneously, that is, one or more functions in the two or more domains need to call the function, two or more sets of same or similar function deployment need to be maintained in the two or more domains simultaneously. For some functions that do not need to be migrated (for example, do not need a service requirement of the domain to which the to-be-migrated function is migrated), multi-domain deployment of these functions may bring great data redundancy, errors are more likely to occur during development and deployment of the function. In addition to the disadvantages, in the current technical background, a degree of function splitting usually depends on a trust degree of the function in accessing shared data in a service flow. The more complex the data flow generated by cross-domain call, the more the shared data, and the greater the mutual impact between function security and function cross-domain access performance. However, this relationship cannot be deduced based on service requirements. As a result, it is difficult for the user to balance the function security and the function performance during function splitting. In addition, data used by each function is abstracted as a service and is a black box for the outside. The data can be shared within a function but cannot be shared from the outside (that is, data cannot be shared between functions). Therefore, data sharing or multi-domain deployment needs to be considered during function splitting, causing heavy workload of function migration.

In view of this, embodiments of this application provide a function migration method and apparatus, and an intelligent driving device. When a function is migrated from an initial deployment zone to a to-be-migrated-in zone, migration is performed in a unit of a sub-function in the function, and a cross-domain cache zone is set, to implement cross-domain call of the function. In this way, a same function (or sub-function) does not need to be repeatedly deployed in two or more domains, to resolve a data redundancy problem caused by repeated deployment. Further, a cross-domain call feature of the function is determined by using data in a cross-domain call process of the function recorded in the cross-domain cache zone, and the cross-domain call feature indicates further migration of the function, for example, indicate that a sub-function of the function is migrated from the initial deployment zone to the to-be-migrated-in zone, or indicate that a sub-function of the function that is migrated to the to-be-migrated-in zone is migrated back to the initial deployment zone, so that when an actual running status of the function deviates from a service requirement after the function is deployed, the function can be conveniently redeployed, and this helps improve function migration and deployment efficiency.

The following describes technical solutions of embodiments in this application with reference to accompanying drawings.

FIG. 2 is a functional block diagram of an intelligent driving device according to an embodiment of this application. As shown in FIG. 2, an intelligent driving device 100 may include a sensing system 120 and a computing platform 150. The sensing system 120 may include several types of sensors configured to sense information about an environment around the intelligent driving device 100. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and an image shooting apparatus. The millimeter-wave radar may be classified into a long-range radar and a medium/short-range radar. Currently, a sensing range of the lidar is about 80 meters to 150 meters, a sensing range of the long-distance millimeter-wave radar is about one meter to 250 meters, a sensing range of the medium/short-distance millimeter-wave radar is about 30 meters to 120 meters, a sensing range of a camera is about 50 meters to 200 meters, and a sensing range of the ultrasonic radar is about 0 meters to 5 meters.

Some or all functions of the intelligent driving device 100 may be controlled by the computing platform 150. The computing platform 150 may include processors 151 to 15n. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may call the instructions in the memory, to implement a corresponding function.

The intelligent driving device 100 may include an advanced driving assistant system (advanced driving assistant system, ADAS). The ADAS obtains information around the intelligent driving device by using a plurality of sensors (including but not limited to a lidar, a millimeter-wave radar, an image shooting apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and driver monitoring/reminding, so as to improve driving safety, automation, and comfort of the intelligent driving device.

In terms of logical functions, the ADAS system generally includes three main function modules: a sensing module, a decision-making module, and an execution module. The sensing module senses an environment around a vehicle body through the sensor, and inputs corresponding real-time data to the decision-making module, and the sensing module mainly includes a vehicle-mounted camera, an ultrasonic radar, a millimeter-wave radar, a lidar, or the like. The decision-making module makes a corresponding decision by using a computing apparatus and an algorithm based on information obtained by the sensing module. After receiving a decision-making signal from the decision-making module, the execution module takes a corresponding action, for example, driving, changing a lane, steering, braking, or warning.

At different intelligent driving levels (LO to L5), the ADAS may implement different levels of autonomous driving assistance based on information obtained by using an artificial intelligence algorithm and a plurality of sensors. The foregoing intelligent driving levels (LO to L5) are based on a grading standard of the society of automotive engineers (society of automotive engineers, SAE). The level L0 indicates no automation, a level L1 indicates driving assistance, a level L2 indicates partial automation, a level L3 indicates conditional automation, a level L4 indicates high automation, and the level L5 indicates full automation. Tasks of monitoring and responding to road conditions at the L1 to L3 levels are jointly completed by a driver and a system, and the driver needs to take over a dynamic driving task. The L4 and L5 levels enable the driver to be completely transformed into a passenger. Currently, functions that can be implemented by the ADAS mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different intelligent driving levels (LO to L5). A higher intelligent driving level indicates a more intelligent corresponding mode, and requires higher precision of a sensing algorithm and higher precision of a planning and control algorithm.

In some possible implementations, function modules in the ADAS or functions (or other services) that can be implemented by the ADAS may require different security levels. For example, some functions may require a high security level. Therefore, during ADAS development, all functions are debugged in a common domain, and then the functions with high security requirements are split and migrated to a security domain.

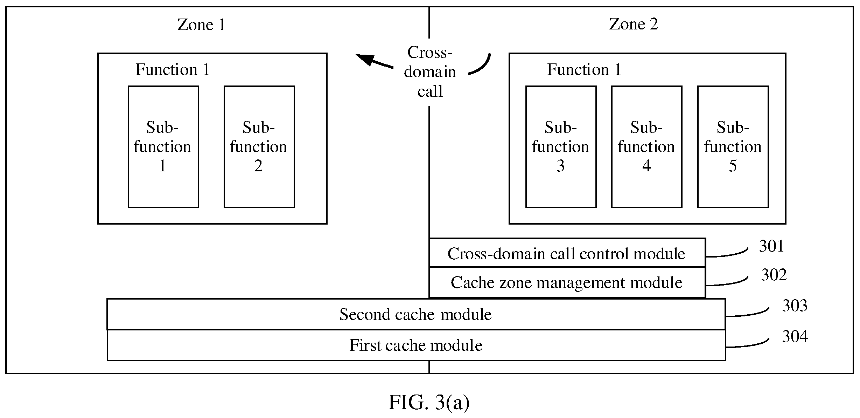

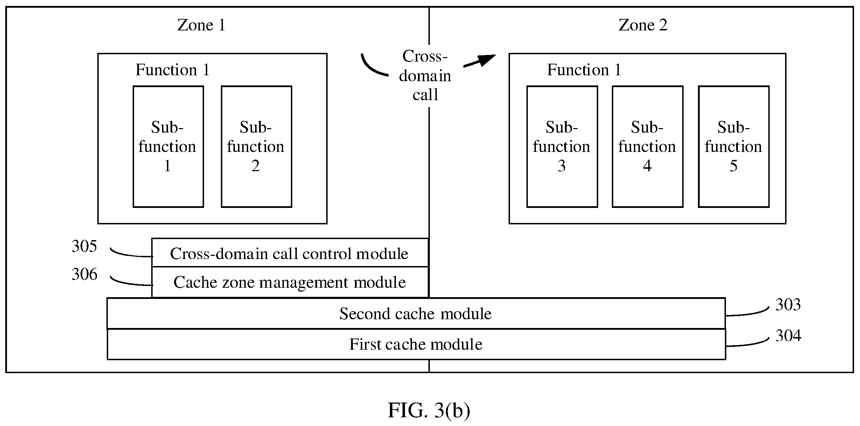

An embodiment of this application provides a function migration method, where function migration is performed by using one sub-function as one migration unit based on a dependency relationship of a sub-function in a function. After a time of migration, a plurality of sub-functions of a function may be deployed in two or more domains. Therefore, a sub-function may need to call a sub-function of the function in another domain, and/or call another function and data in another domain. FIG. 3(a) and FIG. 3(b) are a diagram of a system framework required for function migration according to an embodiment of this application, to implement cross-domain call, and indicate further function migration.

In FIG. 3(a) (referred to as FIG. 3a for short below), sub-functions 3 to 5 of a function 1 are migrated from an initial deployment zone (a zone 1) of the function 1 to a to-be-migrated-in zone (a zone 2) of a domain controller. After the sub-functions 3 to 5 are migrated to the zone 2, functions and/or data in the zone 1 need to be called. Therefore, a cross-domain call control module 301 and a cache zone management module 302 are disposed in the zone 2. In addition, a cross-domain second cache module 303 and a cross-domain first cache module 304 are disposed. For a sub-function that is in the zone 2 and that needs to call the function and/or the data in the zone 1, the cache zone management module 302 sets, in the first cache module 304, a cross-domain cache zone used for cross-domain call of the sub-function. Further, the cross-domain call control module 301 controls the sub-function to perform cross-domain call. In addition, the cross-domain cache zone set for the sub-function in the first cache module 304 records cross-domain data of the sub-function, and when the cross-domain data meets a preset condition, the cross-domain data is stored into the second cache module 303. The cache zone management module 302 determines and stores cross-domain call information of the sub-function based on the cross-domain data of the sub-function stored in the second cache module 303, to indicate to migrate the sub-function back to the zone 1 from the zone 2. It should be noted that, after the sub-function is migrated back to the zone 1, the cache zone management module 302 may delete the cross-domain cache zone set in the first cache module 304 for the sub-function.

In FIG. 3(b) (referred to as FIG. 3b for short below), sub-functions 3 to 5 of a function 1 are migrated from an initial deployment zone (a zone 1) of the function 1 to a to-be-migrated-in zone (a zone 2) of a domain controller. After the sub-functions 3 to 5 are migrated, a sub-function 1 and/or a sub-function 2 in the zone 1 need to call a function and/or data in the zone 2. Therefore, a cross-domain call control module 305 and a cache zone management module 306 are disposed in the zone 1. For a sub-function that is in the zone 1 and that needs to call the function and/or the data in the zone 2, the cache zone management module 306 sets, in the first cache module 304, a cross-domain cache zone used for cross-domain call of the sub-function. Further, the cross-domain call control module 305 controls the sub-function to perform cross-domain call. In addition, the cross-domain cache zone set for the sub-function in the first cache module 304 records cross-domain data of the sub-function, and when the cross-domain data meets a preset condition, the cross-domain data is stored into the second cache module 303. The cache zone management module 306 determines and stores cross-domain call information of the sub-function based on the cross-domain data of the sub-function stored in the second cache module 303, to indicate to migrate the sub-function from the zone 1 to the zone 2. It should be noted that, after the sub-function is migrated to the zone 2, the cache zone management module 306 may delete the cross-domain cache zone set in the first cache module 304 for the sub-function.

It may be understood that, the first cache module 304 may include one or more cross-domain cache zones.

In some possible implementations, the second cache module 303 also includes one or more cross-domain cache zones. For example, for a sub-function having a cross-domain call requirement, the cache zone management module 302 may set, in the second cache module 303, a cross-domain cache zone used for cross-domain call of the sub-function.

For example, the function 1 may be any one of functions such as a path planning function, a sensing function, and a fusion function. For example, the function 1 is the path planning function, and the sub-function 1 to the sub-function 5 may be respectively a decision preprocessing sub-function, a prior preprocessing sub-function, a path generation sub-function, an obstacle processing sub-function, and a track generation sub-function. The zone 1 and the zone 2 may be respectively the common domain and the security domain mentioned in the foregoing embodiment. Alternatively, the zone 1 and the zone 2 may be other zones that respectively meet different service requirements. This is not specifically limited in embodiments of this application.

For example, the cross-domain call control module 301 (and/or the cross-domain call control module 305) shown in FIG. 3(a) and FIG. 3(b) may be implemented by a client-server (client-server, C/S) structure, or may be implemented in another form.

It should be understood that a system architecture shown in FIG. 3(a) and FIG. 3(b) is merely an example for description. During specific implementation, the foregoing system may include more or fewer modules or nodes, and the modules or nodes may be deleted or added based on an actual situation. For example, the first cache module 304 and the second cache module 303 may be combined into one cache module. In addition, in FIG. 3(a) and FIG. 3(b), two zones, namely, the zone 1 and the zone 2, are used as an example for description. During specific implementation, the domain controller may further include more zones, and the first cache module 304 and the second cache module 303 may be further deployed across a plurality of domains.

In some possible implementations, the system architecture shown in FIG. 3(a) and FIG. 3(b) may be applied to the following two scenarios.

First scenario: A security level of the zone 2 is higher than a security level of the zone 1, and the function 1 is migrated from the zone 1 to the zone 2. However, a dependency function of the function 1 does not need a high security level. Therefore, the dependency function of the function 1 is not migrated to the zone 2. In this case, a part of sub-functions of the function 1 need to call a function and/or data in the zone 1.

Second scenario: A security level of the zone 2 is higher than a security level of the zone 1, and a part of sub-functions of the function 1 are migrated from the zone 1 to the zone 2. A part of sub-functions that are of the function 1 and that are located in the zone 1 need to call a function and/or data in the zone 2, or a part of sub-functions that are of the function 1 and that are located in the zone 2 need to call a function and/or data in the zone 1.

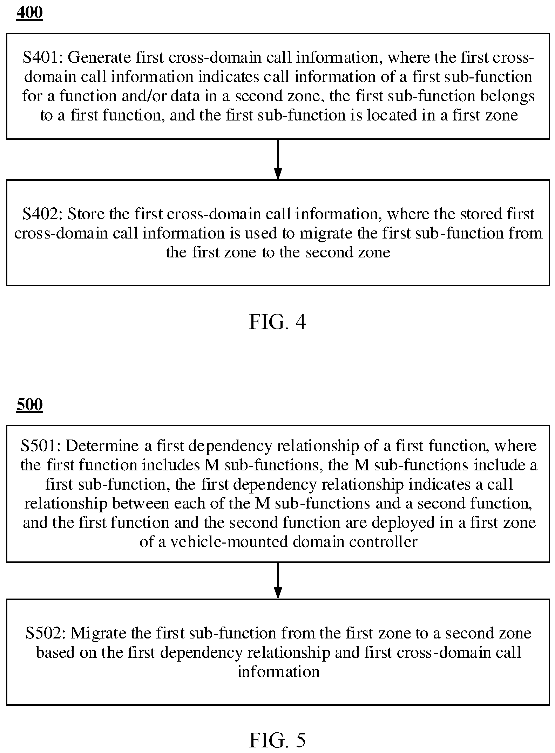

FIG. 4 is a schematic flowchart of a function migration method according to an embodiment of this application. The method 400 may be performed by a vehicle-mounted domain controller, or may be performed by a chip used in the vehicle-mounted domain controller. For example, the vehicle-mounted domain controller may include the computing platform 150 shown in FIG. 2. In this case, the method may be performed by the computing platform 150. Alternatively, the method may be performed by the cross-domain call control module 301 and/or the cache zone management module 302 shown in FIG. 3(a) and FIG. 3(b), or may be performed by the cross-domain call control module 305 and/or the cache zone management module 306, or may be performed by the cross-domain call control module 301, the first cache module 304, and the second cache module 303, or may be performed by the cross-domain call control module 305, the first cache module 304, and the second cache module 303. The following describes the method 400 by using an example in which the method is performed by the vehicle-mounted domain controller. The vehicle-mounted domain controller includes a first zone and a second zone. The method 400 may include S401 and S402.

S401: Generate first cross-domain call information, where the first cross-domain call information indicates call information of a first sub-function for a function and/or data in the second zone, the first sub-function belongs to a first function, and the first sub-function is located in the first zone.

For example, the first zone is an initial deployment zone of the first function, and the second zone is a to-be-migrated-in zone of the first function or at least a part of sub-functions of the first function. For example, the first zone may be the common domain in the foregoing embodiment, and the second zone may be the security domain in the foregoing embodiment. For another example, the first zone may be the zone 1 in the foregoing embodiment, and the second zone may be the zone 2 in the foregoing embodiment.

For example, the first zone is a zone into which the first function or at least a part of sub-functions of the first function are migrated, and the second zone is an initial deployment zone of the first function. For example, the first zone may be the security domain in the foregoing embodiment, and the second zone may be the common domain in the foregoing embodiment. For another example, the first zone may be the zone 2 in the foregoing embodiment, and the second zone may be the zone 1 in the foregoing embodiment.

In some possible implementations, the first zone and the second zone may alternatively be other zones that can respectively meet different service requirements in the vehicle-mounted domain controller.

For example, the first function may be the function 1 in the foregoing embodiment, or the first function may be another function that needs to be migrated; and the first sub-function may be one or more of the sub-functions 1 to 5 in the foregoing embodiment, or may be another sub-function that is in the first function and that needs to call the function and/or the data in the second zone across domains.

In an example, when the first function is the function 1 shown in FIG. 3a, the first zone is the zone 2 shown in FIG. 3a, and the second zone is the zone 1 shown in FIG. 3a, the first sub-function may be at least one of the sub-functions 3 to 5.

In another example, when the first function is the function 1 shown in FIG. 3b, the first zone is the zone 1 shown in FIG. 3b, and the second zone is the zone 2 shown in FIG. 3b, the first sub-function may be the sub-function 1 and/or the sub-function 2.

In some possible implementations, the first sub-function may be a service unit (or referred to as a service segment) obtained through division in the first function based on an actual service requirement. For example, the first sub-function may be a service unit.

For example, call information of the first sub-function for the function in the second zone may include call information of the first sub-function for a sub-function of the first function in the second zone, or may include call information of the first sub-function for another dependency function of the first function in the second zone. Call information of the first sub-function for the data in the second zone may include call information for cross-domain shared data in the second zone.

In some possible implementations, the first cross-domain call information may be information indicating that cross-domain costs (costs) of the first sub-function are greater than or equal to a preset threshold. When the cross-domain costs of the first sub-function are greater than or equal to the preset threshold, it indicates that cross-domain call of the first sub-function may cause security and/or performance deterioration of the vehicle-mounted domain controller. Therefore, the first sub-function needs to be migrated from the first zone to the second zone. For example, the cross-domain costs may be determined based on at least one of a frequency, a data amount, and a delay tolerance of calling the second zone by the first sub-function, a cross-domain call quantity of the first sub-function, a migration priority of the first sub-function, and a cohesion factor of the first sub-function. The cross-domain call quantity of the first sub-function may be understood as a quantity of functions (and/or sub-functions) called by the first sub-function across domains. The cohesion factor of the first sub-function indicates a close degree of collaboration between the first sub-function and another sub-function of the first function, or may be understood as a degree of dependency of the first sub-function to another sub-function of the first function, where the another sub-function of the first function includes a sub-function located in the first zone and/or a sub-function located in the second zone. The migration priority of the first sub-function may be set by a user, or may be determined based on a dependency relationship of the first sub-function and/or a security level requirement of the first sub-function. For example, if there is a complex dependency relationship between the first sub-function and a sub-function of the second zone and/or a security level requirement of the first sub-function is high, the first sub-function has a high migration priority.

For example, cross-domain costs of an i$^{th}$ sub-function may be determined according to the following formula:

$$cost_{\text{cross-domain } i} = \beta_0 \alpha_1 + \beta_1 \alpha_2 + \beta_2 \alpha_3 + \beta_3 \alpha_4 + \beta_4 \alpha_5 + \beta_5 \alpha_6 \quad (1)$$

Herein, $\alpha_1$ to $\alpha_6$ respectively indicate a frequency, a data amount, a delay tolerance of calling the second zone by the i$^{th}$ sub-function, a cross-domain call quantity of the i$^{th}$ sub-function, a migration priority of the i$^{th}$ sub-function, and a score of a cohesion factor of the i$^{th}$ sub-function, and $\beta_0$ to $\beta_5$ are weights of $\alpha_1$ to $\alpha_6$.

For example, the preset threshold may be 1, or may be another threshold. This is not specifically limited in embodiments of this application.

In some possible implementations, cross-domain data of sub-functions in the first zone and the second zone is recorded in a first cache zone; when cross-domain data of the first sub-function meets a specified service requirement, the cross-domain data of the first sub-function is obtained from the first cache zone; and the first cross-domain call information is generated based on the cross-domain data of the first sub-function and information about a service accessed by the first sub-function.

For example, the cross-domain data of the sub-functions in the first zone and the second zone may include: data generated when the sub-function in the first zone calls a function and/or data in the second zone, and/or data generated when the sub-function in the second zone calls a function and/or data in the first zone.

For example, the cross-domain data of the sub-functions in the first zone and the second zone includes the cross-domain data of the first sub-function, and the cross-domain data of the first sub-function may include at least one of the following: a frequency, a delay tolerance, and a data amount of accessing the second zone by the first sub-function.

It should be noted that "a service accessed by the first sub-function" may include a service corresponding to a function called by the first sub-function; and "accessing the second zone by the first sub-function" may include: The first sub-function calls the function and/or the data in the second zone.

For example, the specified service requirement may include at least one of the following: a cross-domain call frequency of the first sub-function is greater than or equal to a preset frequency, a security level required by the first sub-function is less than or equal to a preset level, a cross-domain call data amount of the first sub-function is greater than or equal to a preset data amount, a migration priority of the first sub-function is greater than or equal to a preset priority threshold, a delay tolerance of the first sub-function is greater than or equal to a preset tolerance, and a cross-domain call quantity of the first sub-function is greater than or equal to a preset quantity.

In some possible implementations, when one of the foregoing items is met, the cross-domain data of the first sub-function is obtained from the first cache zone. For example, when the cross-domain call frequency of the first sub-function is greater than or equal to the preset frequency, the cross-domain data of the first sub-function is obtained from the first cache zone. Alternatively, when some of the foregoing items are met, the cross-domain data of the first sub-function is obtained from the first cache zone. For example, when the cross-domain call frequency of the first sub-function is greater than or equal to the preset frequency, and the security level required by the first sub-function is less than or equal to the preset level, the cross-domain data of the first sub-function is obtained from the first cache zone. Further, the first cross-domain call information is generated based on the information about the service accessed by the first sub-function and the cross-domain data of the first sub-function. For example, based on the information about the service accessed by the first sub-function, weights of items of the cross-domain data, for example, specific values of $\beta_0$ to $\beta_5$ in Formula (1) obtained when the cross-domain costs are calculated are determined. Further, the cross-domain costs are calculated based on the determined weights of the items of the cross-domain data, and the first cross-domain call information is generated when the cross-domain costs are greater than or equal to the preset threshold.

For example, the first cache zone may be a cache zone in the first cache module 304 shown in FIG. 3a or FIG. 3b.

In some possible implementations, the cross-domain data recorded in the first cache zone may be processed by using a cache replacement algorithm. For example, when an occurrence frequency of cross-domain data of a sub-function is low, the cross-domain data of the sub-function in the first cache zone is erased. For example, the cache replacement algorithm may include but is not limited to: a first-in first-out (first-in first-out, FIFO) algorithm, a least-recently-used (least-recently-used, LRU) algorithm, and a least-frequently-used (least-frequently-used, LFU) algorithm.

In some possible implementations, obtaining the cross-domain data of the first sub-function from the first cache zone may include: obtaining the cross-domain data of the first sub-function from the first cache zone by using a second cache zone.

For example, when the cross-domain data of the first sub-function meets the specified service requirement, the cross-domain data of the first sub-function is stored into the second cache zone, and the cross-domain data of the first sub-function in the first cache zone is erased.

For example, the second cache zone may be a cache zone in the second cache module 303 shown in FIG. 3a or FIG. 3b.

S402: Store the first cross-domain call information, where the stored first cross-domain call information is used to migrate the first sub-function from the first zone to the second zone.

In some possible implementations, the storing the first cross-domain call information may include: controlling storing the first cross-domain call information. For example, the cross-domain call control module 301 in FIG. 3a or the cross-domain call control module 305 in FIG. 3b may control storing the first cross-domain call information.

In some possible implementations, the storing the first cross-domain call information may include: storing the first cross-domain call information in the second cache zone. For example, the cache zone management module 302 in FIG. 3a or the cache zone management module 306 in FIG. 3b may write the first cross-domain call information into a cache zone in the second cache module 303.

In some possible implementations, for each sub-function of cross-domain call, cross-domain costs are calculated. When cross-domain costs of a sub-function are greater than or equal to the preset threshold, cross-domain call information corresponding to the sub-function is generated and stored.

In some possible implementations, for each sub-function of cross-domain call, cross-domain data of the sub-function is recorded in the first cache zone, and when the cross-domain data meets a corresponding specified service requirement, the cross-domain data of the sub-function is stored into the second cache zone. In this case, the vehicle-mounted domain controller calculates cross-domain costs only for cross-domain data of a sub-function stored in the second cache zone, and when cross-domain costs of a sub-function are greater than or equal to the preset threshold, cross-domain call information corresponding to the sub-function is generated and stored.

In some possible implementations, a form of the stored first cross-domain call information may be a to-be-migrated list. For example, when the cross-domain costs of the first sub-function are greater than or equal to the preset threshold, related information of the first sub-function is stored into the to-be-migrated list, to indicate that the first sub-function needs to be migrated from the first zone to the second zone. For example, the related information of the first sub-function may include a cross-domain call application programming interface and/or a cross-domain data access pointer of the first sub-function; or the related information of the first sub-function may include information used to determine a cross-domain call application programming interface and/or a cross-domain data access pointer of the first sub-function.

In some possible implementations, the method further includes: marking the cross-domain call application programming interface and/or the cross-domain data access pointer of the first sub-function by using a keyword; and generating a scheduling function based on the keyword, where the scheduling function is used to adjust a behavior of accessing the second zone by the first sub-function.

It may be understood that the cross-domain call application programming interface and/or the cross-domain data access pointer of the first sub-function are/is used by the first sub-function to implement cross-domain call.

For example, that the scheduling function is used to adjust the behavior of accessing the second zone by the first sub-function may include: implementing, by using the scheduling function, cross-domain call performed after the first sub-function is migrated, and/or adjusting, by using the scheduling function, a cross-domain call priority used after the first sub-function is migrated. For example, the cross-domain call priority may indicate a priority of calling another function and/or data across domains by the first sub-function.

For example, the scheduling function is implemented by using a Dispatcher function.

For example, when the first sub-function needs to be migrated from the first zone to the second zone, the scheduling function delivers, from the first zone to the second zone, code corresponding to a dependency function of the first sub-function for execution.

In some possible implementations, when the stored first cross-domain call information is detected, for example, when the related information of the first sub-function is detected in the to-be-migrated list, the keyword is used to mark the cross-domain call application programming interface and/or the cross-domain data access pointer of the first sub-function, and the scheduling function is generated based on the keyword.

In some possible implementations, the first sub-function is migrated from the first zone to the second zone based on the stored first cross-domain call information.

According to the function migration method provided in this embodiment of this application, a cross-domain cache zone is set, and cross-domain call of a to-be-migrated function and/or a migrated function is implemented by using the cross-domain cache zone, so that multi-domain deployment does not need to be performed during function migration, to help reduce data redundancy caused by the multi-domain deployment of the function. Further, recording and analysis of cross-domain data are implemented based on the cross-domain cache zone, so that when cross-domain data of a function meets a specific condition, cross-domain call information may be generated to indicate to migrate the function. In addition, embodiments of this application propose a concept of a sub-function of the to-be-migrated function. Cross-domain call and migration indication are performed at a granularity, namely, a sub-function, smaller than a function, so that when an actual running status of the function may deviate from a service requirement after the function is migrated and deployed, function deployment adjustment (that is, the sub-function is further migrated or the sub-function is re-migrated) is facilitated, and this helps reduce complexity and costs of function migration.

FIG. 5 is a schematic flowchart of a function migration method 500 according to an embodiment of this application. The method 500 is an extension of the method 400. For example, the method 500 may be performed in parallel with the method 400, or may be performed after the method 400. For example, the method may be performed by a vehicle-mounted domain controller, or may be performed by a chip used in the vehicle-mounted domain controller. The following describes the method 500 by using an example in which the method is performed by the vehicle-mounted domain controller. The method 500 may include steps S501 and S502.

S501: Determine a first dependency relationship of a first function, where the first function includes M sub-functions, the M sub-functions include a first sub-function, the first dependency relationship indicates a call relationship between each of the M sub-functions and a second function, and the first function and the second function are deployed in a first zone of the vehicle-mounted domain controller.

In some possible implementations, the first dependency relationship is used to control N sub-functions in the M sub-functions to be migrated to a second zone, M is an integer greater than 1, and N is an integer greater than or equal to 1.

For example, the first zone and the second zone may be zones in the foregoing embodiment. For example, the first zone is an initial deployment zone of the first function, and the second zone is a to-be-migrated-in zone of the first function or a sub-function of the first function.

In some possible implementations, a security level of the second zone is higher than a security level of the first zone.

A "security level" of a zone may be understood as a security level that can be provided (or implemented) in the zone. For example, a security level of a security domain is higher than a security level of a common domain.

For example, the first function may be the first function in the foregoing embodiment, or the first function may be another function that needs to be migrated; and the first sub-function may be the first sub-function in the foregoing embodiment.

For example, the second function includes a horizontal dependency function and/or a vertical dependency function of the first function (or the M sub-functions).

In an example, when it is determined that the first function is a to-be-migrated function (that is, a function that needs to be migrated from the first zone to the second zone), the first dependency relationship of the first function is determined.

In another example, when a part of sub-functions of the first function are migrated to the second zone (remaining sub-functions of the first function are still deployed in the first zone, and the remaining sub-functions include the M sub-functions), and first cross-domain call information is detected, the first dependency relationship of the first function is determined. It should be noted that, in the foregoing case, that the first function is deployed in the first zone of the vehicle-mounted domain controller includes: The remaining sub-functions of the first function are deployed in the first zone.

For example, the determining the first dependency relationship of the first function may be divided into two steps, including: first, determining the dependency relationship of the first function; and second, determining a dependency relationship of each sub-function of the first function. The dependency relationship may include horizontal dependency and vertical dependency.

An example in which the first function is a radar detection function serving autonomous driving control is used to describe a method for determining the dependency relationship of the first function. It is assumed that functions that have horizontal dependency on the first function include a radar sensor function, a fusion position function, and a sensor fusion function, functions that have vertical dependency on the first function include an underlying function A and an underlying function B, and the underlying function A further needs to depend on an underlying function C and an underlying function D. Based on an autonomous driving development framework middleware, a horizontal dependency function of the first function (namely, a function that has horizontal dependency on the first function) may be determined by using tools such as Topic Monitor, RefGraph, and RosGraph, and a vertical dependency function of the first function (namely, a function that has vertical dependency on the first function) is determined by using a dynamic link library dependency scanning method and a depth first search (depth first search, DFS) algorithm. Further, the dependency relationship of the first function may be recorded in a form of table. For example, Table 1 shows the dependency relationship of the radar detection function determined in the foregoing method.

Table 1 Diagram of the dependency relationship of the radar detection function

| To-be-migrated function | Horizontal dependency function | Vertical dependency function |
|---|---|---|
| Radar detection function | Radar sensor function, fusion position function, and sensor fusion function | Underlying function A, underlying function B, underlying function C, and underlying function D |
| ... | ... | ... |

An example in which the first function is the radar detection function serving autonomous driving control is used to describe a method for determining the dependency relationship of each sub-function of the first function. It is assumed that the radar detection function includes a plurality of sub-functions, for example, a data preprocessing sub-function, a data smoothing sub-function, a road processing sub-function, and a track planning sub-function. There is horizontal dependency between the road processing sub-function and each of the data preprocessing sub-function and the track planning sub-function, and there is vertical dependency between the road processing sub-function and the underlying function A. There is horizontal dependency between the data preprocessing sub-function and each of the data smoothing sub-function and the fusion position function, and there is vertical dependency between the data preprocessing sub-function and each of the underlying function A, the underlying function B, and the underlying function C. In this case, the dependency relationship of the sub-function of the first function may be determined in the foregoing method. Further, the dependency relationship of the sub-function of the first function may be recorded in a form of table. For example, Table 2 shows the dependency relationship of the sub-function of the radar detection function determined in the foregoing method.

Table 2 Diagram of the dependency relationship of the sub-function of the radar detection function

| Sub-function of the to-be-migrated radar detection function | Horizontal dependency function | Vertical dependency function |
|---|---|---|
| Data preprocessing sub-function | Data smoothing sub-function and fusion position function | Underlying function A, underlying function B, and underlying function C |
| Sub-function of the to-be-migrated radar detection function | Horizontal dependency function | Vertical dependency function |
| Road processing sub-function | Data preprocessing sub-function and track planning sub-function | Underlying function A |
| ... | ... | ... |

In some possible implementations, after the first dependency relationship is determined, the first dependency relationship is output, to indicate migration of the first function.

S502: Migrate the first sub-function from the first zone to the second zone based on the first dependency relationship and the first cross-domain call information.

In some possible implementations, the first sub-function is migrated from the first zone to the second zone based on the first cross-domain call information and a complexity level of a dependency relationship of the first sub-function indicated by the first dependency relationship.

The complexity level of the dependency relationship of the first sub-function may include at least one of the following: a complexity level of a dependency relationship between the first sub-function and a function in the first zone, a complexity level of a dependency relationship between the first sub-function and data in the first zone, a complexity level of a dependency relationship between the first sub-function and a function in the second zone, and a complexity level of a dependency relationship between the first sub-function and data in the second zone. For example, the complexity level may be determined based on a quantity of horizontal dependency functions, a quantity of vertical dependency functions, and the like.

During specific implementation, not all operations in FIG. 5 need to be performed. For example, only S501 may be performed. It should be noted that, when the vehicle-mounted domain controller performs only S501, an operation of migrating the first sub-function from the first zone to the second zone may be performed by a user.

According to the function migration method provided in this embodiment of this application, a dependency relationship of a function can be determined, and the first sub-function is migrated from the first zone to the second zone based on the dependency relationship or based on the dependency relationship and the first cross-domain call information, to reduce workload of manually migrating a function. In addition, migration of the first sub-function is controlled based on the dependency relationship and the first cross-domain call information. This further helps improve a degree of matching between an actual running status of the first function and a service requirement, to further reduce a quantity of times of function migration.

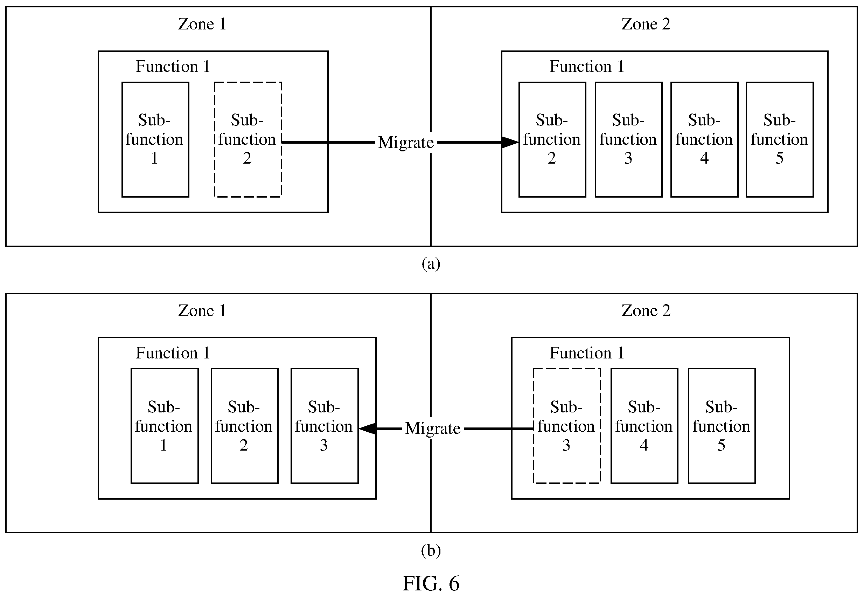

FIG. 6 is a diagram of an application scenario of a function migration method according to an embodiment of this application.

In an example, as shown in (a) in FIG. 6, if a zone 1 is the first zone in the method 400, a zone 2 is the second zone in the method 400, and a sub-function 2 in the zone 1 is the first sub-function in the method 400, when the sub-function 2 in the zone 1 calls a function and/or data in the zone 2, first cross-domain call information may be generated and stored. Further, the sub-function 2 is migrated from the zone 1 to the zone 2 based on the stored cross-domain call information. It should be understood that after the sub-function 2 is migrated from the zone 1 to the zone 2, the sub-function 2 may not be deployed in the zone 1.

In another example, as shown in (b) in FIG. 6, if a zone 2 is the first zone in the method 400, a zone 1 is the second zone in the method 400, and a sub-function 3 in the zone 2 is the first sub-function in the method 400, when the sub-function 3 in the zone 2 calls a function and/or data in the zone 1, first cross-domain call information may be generated and stored. Further, the sub-function 3 is migrated from the zone 2 to the zone 1 based on the stored cross-domain call information. It should be understood that after the sub-function 3 is migrated from the zone 2 to the zone 1, the sub-function 3 may not be deployed in the zone 2.

For example, as shown in (a) or (b) in FIG. 6, the zone 1 may be a common domain, and the zone 2 may be a security domain; or the "zone 1" and the "zone 2" are other domains that can respectively meet different service requirements.

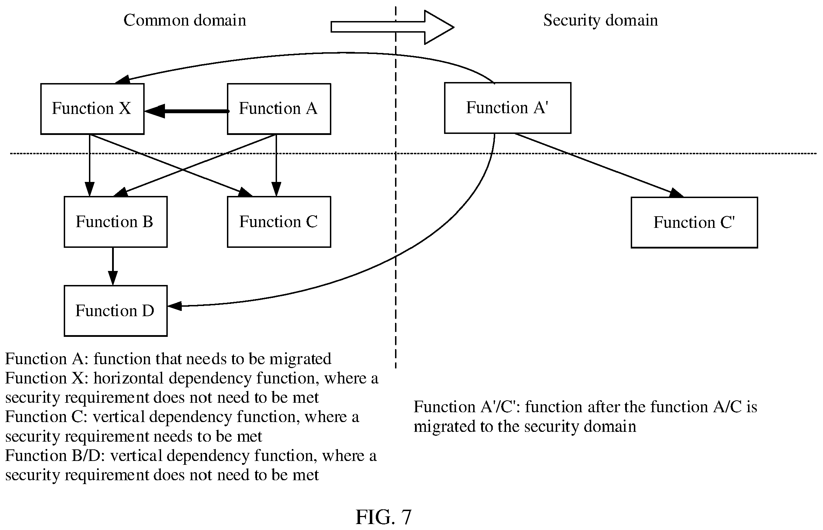

FIG. 7 is another diagram of an application scenario of a function migration method according to an embodiment of this application. As shown in FIG. 7, a function X, a function A, a function B, a function C, and a function D are originally deployed in a common domain. The function A is a function (namely, a first function) that needs to be migrated from the common domain to a security domain, the function X is a function that has horizontal dependency on the function A, and the function B, the function C, and the function D are underlying functions that have vertical dependency on the function A. In addition, in the function B, the function C, the function D, and the function X, only the function C needs to meet a security requirement (that is, needs to be migrated to the security domain). In this case, according to the function migration method provided in this embodiment of this application, only functions (namely, the function A and the function C) having a security requirement may be migrated to the security domain. After migration, the function A and the function C may call functions and/or data in the common domain by using a cross-domain cache zone. For example, after the function is migrated, if a function A' in the security domain needs to call the function D and the function X in the common domain, this may be implemented by using the cross-domain cache zone.

In some possible implementations, a part of sub-functions of the function A may be migrated to the security domain, and a remaining sub-function is reserved in the common domain. After the function is migrated, the part of the sub-functions of the function A are reserved in the function A', and a part of the sub-functions may be reserved in the function A. Alternatively, the function A may be migrated to the security domain as a whole. After the function is migrated, the function A is no longer deployed in the common domain, and the function A' in the security domain is a function that is the same as the function A. It should be noted that the foregoing two cases are also applicable to the function C.

It can be learned from FIG. 7 that, according to the function migration method provided in this application, when a to-be-migrated function is migrated to a to-be-migrated-in zone, when a dependency function (including a horizontal dependency function and/or a vertical dependency function) of the to-be-migrated function does not need to meet a service requirement provided by the to-be-migrated-in zone, for example, a requirement like a security level limitation (for example, the function B, the function D, and the function X do not need the security level provided by the security domain), the dependency function does not need to be migrated to the to-be-migrated-in zone, to avoid unnecessary multi-domain deployment, so as to help reduce data redundancy.

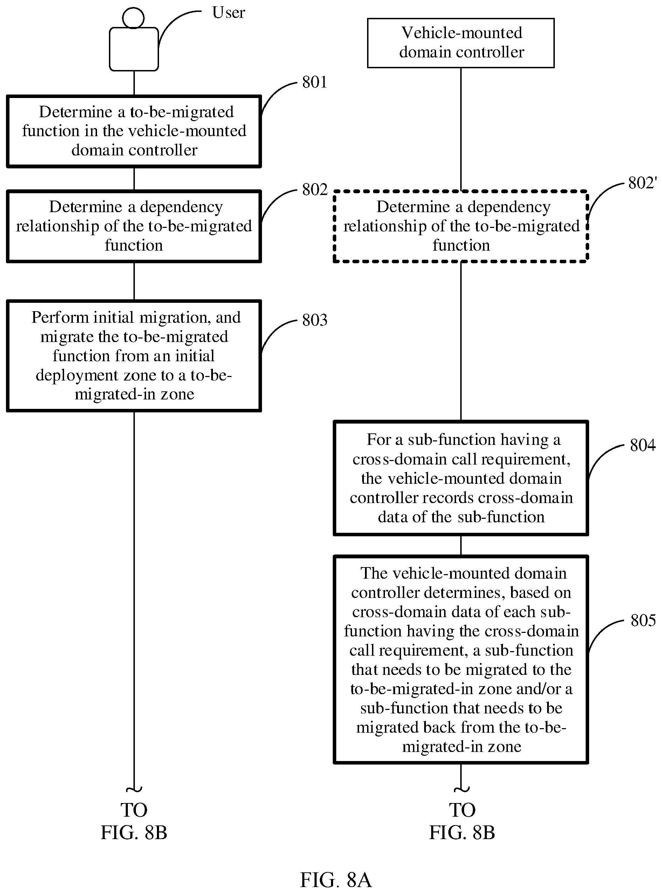

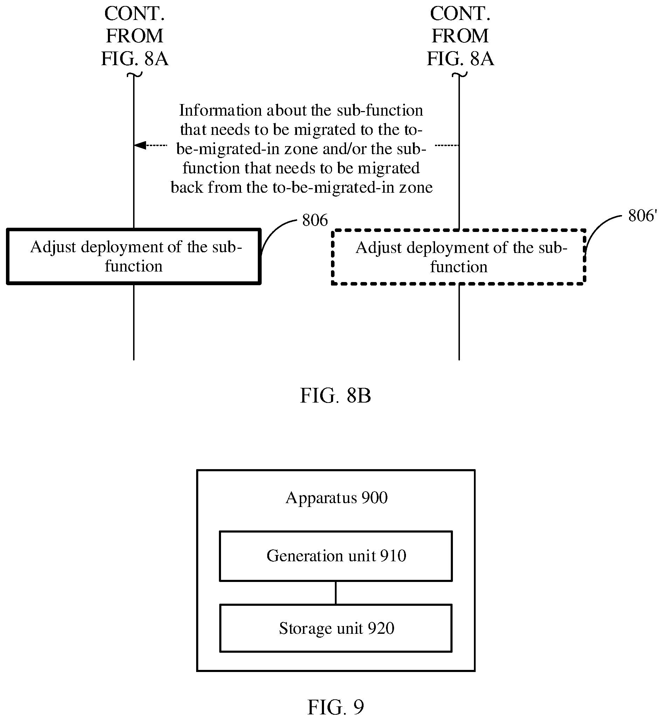

FIG. 8A and FIG. 8B are another diagram of an application scenario of a function migration method according to an embodiment of this application. As shown in FIG. 8A and FIG. 8B, when a first function deployed in a common domain needs to be migrated to a second zone, the first function (or a part of sub-functions of the first function) may be migrated by performing steps 801 to 806. The function migration methods 400 and 500 provided in this application may be applied to 802', 804, and 805.

801: A user determines a to-be-migrated function in a vehicle-mounted controller.

For example, the to-be-migrated function may include the first function in the foregoing embodiment. The to-be-migrated function may be determined based on a service requirement, for example, determined based on a service requirement like a security level requirement, a load balance requirement, or a delay performance requirement of the function.

802: The user determines a dependency relationship of the to-be-migrated function.

In some possible implementations, the dependency relationship of the to-be-migrated function may alternatively be determined by the vehicle-mounted domain controller (as shown in 802'). Further, the vehicle-mounted domain controller notifies the user of the dependency relationship of the to-be-migrated function.

For example, for a method for determining the dependency relationship of the to-be-migrated function, refer to descriptions in the method 500. Details are not described herein again.

803: The user performs initial migration, and migrates the to-be-migrated function from an initial deployment zone to a to-be-migrated-in zone.

For example, the initial deployment zone may include the zone 1 in the foregoing embodiment, and the to-be-migrated-in zone may include the zone 2 in the foregoing embodiment.

In some possible implementations, the initial migration may be determined by the user based on the dependency relationship and a capacity of the to-be-migrated function.

For example, an initial migration manner may include the following two manners: first manner: migrating the to-be-migrated function to the to-be-migrated-in zone as a whole; and second manner: migrating a part of the sub-functions of the to-be-migrated function to the to-be-migrated-in zone.

In an example, when the capacity of the to-be-migrated function is small, for example, the to-be-migrated function includes a small quantity of sub-functions, a part of the sub-functions of the to-be-migrated function do not need a service requirement provided by the to-be-migrated-in zone (for example, does not need to meet a security requirement), and there is a complex dependency relationship between the part of the sub-functions and a function of the initial deployment zone, initial migration of the to-be-migrated function may be implemented in the first manner.

In another example, when the capacity of the to-be-migrated function is large, and a manner of migrating the to-be-migrated function as a whole is not suitable, initial migration of the to-be-migrated function may be implemented in the second manner.

804: For a sub-function having a cross-domain call requirement, the vehicle-mounted domain controller records cross-domain data of the sub-function.

For example, the sub-function having the cross-domain call requirement may be a sub-function deployed in the initial deployment zone, or may be a sub-function that is migrated to the to-be-migrated-in zone. The cross-domain data may be the cross-domain data in the foregoing embodiment.

For example, that the sub-function having the cross-domain call requirement is the first sub-function in the foregoing embodiment is used as an example. For a specific method for recording the cross-domain data of the sub-function by the vehicle-mounted domain controller, refer to descriptions in the foregoing method 400. Details are not described herein again.

805: The vehicle-mounted domain controller determines, based on cross-domain data of each sub-function having the cross-domain call requirement, a sub-function that needs to be migrated to the to-be-migrated-in zone and/or a sub-function that needs to be migrated back from the to-be-migrated-in zone.

In some possible implementations, for the sub-function that needs to be migrated to the to-be-migrated-in zone and/or the sub-function that needs to be migrated from the to-be-migrated-in zone to the initial deployment zone, cross-domain call information is generated, and the cross-domain call information is stored, where the stored cross-domain call information is used to migrate the sub-function to the to-be-migrated-in zone, or migrate the sub-function back to the initial deployment zone from the to-be-migrated-in zone.

For example, for a specific method for generating the cross-domain call information based on the cross-domain data and storing the cross-domain call information, refer to the descriptions in the method 400. Details are not described herein again.

Further, the vehicle-mounted domain controller notifies the user of information (for example, cross-domain call information) about the sub-function that needs to be migrated to the to-be-migrated-in zone and/or the sub-function that needs to be migrated back from the to-be-migrated-in zone. For example, the information about the sub-function may be notified to the user by using a run log of the vehicle-mounted domain controller, or may be notified to the user in another manner.

806: The user adjusts deployment of the sub-function.

For example, the user performs sub-function migration based on the information about the sub-function that needs to be migrated to the to-be-migrated-in zone and/or the sub-function that needs to be migrated back from the to-be-migrated-in zone, for example, performs sub-function migration based on the cross-domain call information, to adjust the deployment of the sub-function.

In some possible implementations, the vehicle-mounted domain controller may also perform sub-function migration, to adjust the deployment of the sub-function.

In some possible implementations, after the deployment of the sub-function is adjusted, 804 to 806 continue to be performed until no sub-function needs to be migrated (for example, no stored cross-domain call information can be detected), that is, migration steps are completed.

It should be noted that after migration is completed by using the function migration method provided in this application, for the to-be-migrated function, some sub-functions may still have a cross-domain call requirement, but cross-domain call of these sub-functions meets a service requirement. For example, a frequency, a data amount, a delay tolerance, and the like of cross-domain call are all lower than a specified service requirement, and meet a performance and security requirement of the to-be-migrated function.

It may be understood that before migration, because the to-be-migrated function has no cross-domain call requirement, there may be no cross-domain cache zone corresponding to the to-be-migrated function in the vehicle-mounted domain controller. After migration is completed, for the some sub-functions having the cross-domain call requirement, a cross-domain cache zone used for cross-domain call of the some sub-functions may be set in the vehicle-mounted domain controller.

It should be further noted that the function migration method provided in this application is applicable to a scenario in which a function is migrated between two or more domains of one vehicle-mounted domain controller, and is further applicable to a scenario in which an initial deployment zone and a to-be-migrated-in zone of a to-be-migrated function are isolated by hardware.

In various embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

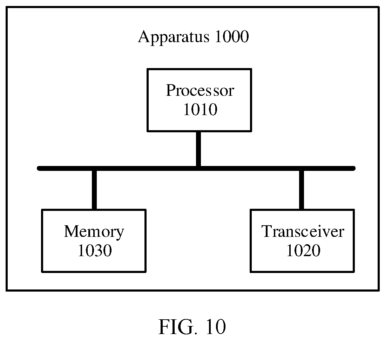

The foregoing describes in detail the method provided in embodiments of this application with reference to FIG. 1 to FIG. 8A and FIG. 8B. The following describes in detail the apparatus provided in embodiments of this application with reference to FIG. 9 and FIG. 10. It should be understood that descriptions of apparatus embodiments correspond to the descriptions of the method embodiments. Therefore, for content that is not described in detail, refer to the method embodiments. For brevity, details are not described herein again.

FIG. 9 is a block diagram of a function migration apparatus 900 according to an embodiment of this application. The apparatus 900 includes a generation unit 910 and a storage unit 920.

The apparatus 900 may include units configured to perform the method in FIG. 4. In addition, the units in the apparatus 900 are respectively used to implement corresponding procedures of the method embodiment in FIG. 4.

When the apparatus 900 is configured to perform the method 400 in FIG. 4, the generation unit 910 may be configured to perform S401 in the method 400, and the storage unit 920 may be configured to perform S402 in the method 400.

Specifically, the generation unit 910 is configured to generate first cross-domain call information, where the first cross-domain call information indicates call information of a first sub-function for a function and/or data in a second zone of a vehicle-mounted domain controller, the first sub-function belongs to a first function, and the first sub-function is located in a first zone of the vehicle-mounted domain controller; and the storage unit 920 is configured to store the first cross-domain call information, where the stored first cross-domain call information is used to migrate the first sub-function from the first zone to the second zone.

Optionally, the storage unit includes a first cache zone, and the apparatus 900 further includes a recording unit; the recording unit is configured to record, in the first cache zone, cross-domain data of sub-functions in the first zone and the second zone; and the generation unit is configured to: when cross-domain data of the first sub-function meets a specified service requirement, obtain the cross-domain data of the first sub-function from the first cache zone, and generate the first cross-domain call information based on the cross-domain data of the first sub-function and information about a service accessed by the first sub-function.

Optionally, the storage unit 920 further includes a second cache zone, and the second cache zone is used to store the first cross-domain call information.

Optionally, the cross-domain data of the first sub-function includes at least one of the following: a frequency, a delay tolerance, and a data amount of accessing the second zone by the first sub-function.

Optionally, the apparatus 900 further includes a determining unit, and the determining unit is configured to determine a first dependency relationship of the first function, where the first function includes M sub-functions, the M sub-functions include the first sub-function, the first dependency relationship indicates a call relationship between each of the M sub-functions and a second function, and the first function and the second function are deployed in the first zone, where the first dependency relationship is used to control N sub-functions in the M sub-functions to be migrated to the second zone, a security level of the second zone is higher than a security level of the first zone, M is an integer greater than 1, and N is an integer greater than or equal to 1.

Optionally, the apparatus 900 further includes a migration unit, and the migration unit is configured to migrate the first sub-function from the first zone to the second zone based on the first dependency relationship and the first cross-domain call information.

Optionally, the apparatus 900 further includes a marking unit; the marking unit is configured to mark a cross-domain call application programming interface and/or a cross-domain data access pointer of the first sub-function by using a keyword; and the generation unit 910 is further configured to generate a scheduling function based on the keyword, where the scheduling function is used to adjust a behavior of accessing the second zone by the first sub-function.

For example, the generation unit 910 and the storage unit 920 may be disposed in the computing platform 150 shown in FIG. 2. The generation unit 910 may be disposed in the cross-domain call management module 301 and/or the cross-domain call control module 305 shown in FIG. 3(a) and FIG. 3(b). The storage unit 920 is disposed in the second cache module 303 shown in FIG. 3(a) and FIG. 3(b). For example, the recording unit may be disposed in the computing platform 150 shown in FIG. 2, or may be disposed in the cache zone management module 302 or the cache zone management module 306 shown in FIG. 3(a) and FIG. 3(b). For example, the obtaining unit, the determining unit, the migration unit, and the marking unit may be disposed in the computing platform 150 shown in FIG. 2, or may be disposed in the cross-domain call control module 301 and/or the cross-domain call control module 305 shown in FIG. 3(a) and FIG. 3(b).

It should be understood that division into the units of the foregoing apparatus is merely logical function division. During actual implementation, all or some of the units may be integrated into one physical entity, or may be physically separated. In addition, the units in the apparatus may be implemented in a form of software called by a processor. For example, the apparatus includes a processor, the processor is connected to a memory, the memory stores instructions, and the processor calls the instructions stored in the memory, to implement any one of the foregoing methods or implement functions of the units in the apparatus. The processor is, for example, a general-purpose processor, for example, a CPU or a microprocessor, and the memory is a memory in the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between components in the circuit. For another example, in another implementation, the hardware circuit may be implemented by using a PLD. An FPGA is used as an example, the FPGA may include a large quantity of logic gate circuits, and a connection relationship between the logic gate circuits is configured by using a configuration file, to implement the functions of some or all of the units. All the units of the apparatus may be implemented in a form of software called by the processor, or may be implemented in a form of hardware circuit, or some of the units are implemented in a form of software called by the processor, and remaining units are implemented in a form of hardware circuit.

The units in the apparatus may be configured as one or more processors (or processing circuits) that implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of system-on-a-chip (system-on-a-chip, SOC). The SOC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

During specific implementation, an operation performed by the generation unit 910 may be performed by a processor, and the processor controls storage of related data and/or information in the storage unit 920. In addition, operations performed by the generation unit 910, the determining unit, the migration unit, and the marking unit may be performed by a same processor, or may be performed by different processors. During specific implementation, the one or more processors may be processors disposed in the computing platform 150 shown in FIG. 2, or the apparatus 900 may be a chip disposed in the intelligent driving device 100.

FIG. 10 is a block diagram of a function migration apparatus according to an embodiment of this application. A function migration apparatus 1000 shown in FIG. 10 may include a processor 1010, a transceiver 1020, and a memory 1030. The processor 1010, the transceiver 1020, and the memory 1030 are connected through an internal connection path. The memory 1030 is configured to store instructions. The processor 1010 is configured to execute the instructions stored in the memory 1030, to implement the function migration method in the foregoing embodiments. Optionally, the memory 1030 may be coupled to the processor 1010 through the interface, or may be integrated together with the processor 1010.

It should be noted that the transceiver 1020 may include but is not limited to a transceiver apparatus of an input/output interface (input/output interface), to implement communication between the apparatus 1000 and another device or a communication network.

The memory 1030 may be a read-only memory (read-only memory, ROM), a static storage device, a dynamic storage device, or a random access memory (random access memory, RAM).

The transceiver 1020 uses, for example, but is not limited to, a transceiver apparatus of a transceiver type, to implement communication between the apparatus 1000 and another device or a communication network, to receive/send data/information used to implement the function migration method in the foregoing embodiments.

During specific implementation, the apparatus 1000 may be disposed in the computing platform 150 shown in FIG. 2, or the apparatus 1000 may be disposed in the cross-domain call control module 301 and/or the cross-domain call control module 305 shown in FIG. 3(a) and FIG. 3(b).

An embodiment of this application further provides a domain controller. The domain controller includes the apparatus 900 or the apparatus 1000.

An embodiment of this application further provides an intelligent driving device. The intelligent driving device includes the apparatus 900, or the apparatus 1000, or may further include the foregoing domain controller.

In some possible implementations, the intelligent driving device may be a vehicle.

An embodiment of this application further provides a computer program product. The computer program product includes computer program code. When the computer program code is run on a computer, the computer is enabled to implement the function migration method in the foregoing embodiments of this application.

An embodiment of this application further provides a computer-readable storage medium. The computer-readable medium stores computer instructions. When the computer instructions are run on a computer, the computer is enabled to implement the function migration method in the foregoing embodiments of this application.

An embodiment of this application further provides a chip, including a circuit, configured to perform the function migration method in the foregoing embodiments of this application.

In an implementation process, steps in the foregoing methods can be implemented by using a hardware integrated logical circuit in the processor, or by using instructions in a form of software. The method disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A function migration method, wherein the method is performed by a vehicle-mounted domain controller, and the vehicle-mounted domain controller comprises a first zone and a second zone; and the method comprises:

   generating first cross-domain call information, wherein the first cross-domain call information indicates call information of a first sub-function for a function and/or data in the second zone, the first sub-function belongs to a first function, and the first sub-function is located in the first zone; and
   storing the first cross-domain call information, wherein the stored first cross-domain call information is used to migrate the first sub-function from the first zone to the second zone.

2. The method according to claim 1, wherein the generating first cross-domain call information comprises:

   recording, in a first cache zone, cross-domain data of sub-functions in the first zone and the second zone;
   when cross-domain data of the first sub-function meets a specified service requirement, obtaining the cross-domain data of the first sub-function from the first cache zone; and
   generating the first cross-domain call information based on the cross-domain data of the first sub-function and information about a service accessed by the first sub-function.

3. The method according to claim 2, wherein the storing the first cross-domain call information comprises:
   storing the first cross-domain call information in a second cache zone.

4. The method according to claim 2 or 3, wherein the cross-domain data of the first sub-function comprises at least one of the following: a frequency, a delay tolerance, and a data amount of accessing the second zone by the first sub-function.

5. The method according to any one of claims 1 to 4, wherein before the generating first cross-domain call information, the method further comprises:

determining a first dependency relationship of the first function, wherein the first function comprises M sub-functions, the M sub-functions comprise the first sub-function, the first dependency relationship indicates a call relationship between each of the M sub-functions and a second function, and the first function and the second function are deployed in the first zone, wherein

the first dependency relationship is used to control N sub-functions in the M sub-functions to be migrated to the second zone, a security level of the second zone is higher than a security level of the first zone, M is an integer greater than 1, and N is an integer greater than or equal to 1.

6. The method according to claim 5, wherein the method further comprises:
migrating the first sub-function from the first zone to the second zone based on the first dependency relationship and the first cross-domain call information.

7. The method according to any one of claims 1 to 6, wherein the method further comprises:

marking a cross-domain call application programming interface and/or a cross-domain data access pointer of the first sub-function by using a keyword; and

generating a scheduling function based on the keyword, wherein the scheduling function is used to adjust a behavior of accessing the second zone by the first sub-function.

8. A function migration apparatus, wherein the apparatus is disposed in a vehicle-mounted domain controller, and the vehicle-mounted domain controller comprises a first zone and a second zone; and the apparatus comprises a generation unit and a storage unit, wherein

the generation unit is configured to generate first cross-domain call information, wherein the first cross-domain call information indicates call information of a first sub-function for a function and/or data in the second zone, the first sub-function belongs to a first function, and the first sub-function is located in the first zone; and

the storage unit is configured to store the first cross-domain call information, wherein the stored first cross-domain call information is used to migrate the first sub-function from the first zone to the second zone.

9. The apparatus according to claim 8, wherein the storage unit comprises a first cache zone, and the apparatus further comprises a recording unit;

the recording unit is configured to record, in the first cache zone, cross-domain data of sub-functions in the first zone and the second zone; and

the generation unit is specifically configured to: when cross-domain data of the first sub-function meets a specified service requirement, obtain the cross-domain data of the first sub-function from the first cache zone, and generate the first cross-domain call information based on the cross-domain data of the first sub-function and information about a service accessed by the first sub-function.

10. The apparatus according to claim 9, wherein the storage unit further comprises a second cache zone, and the second cache zone is used to store the first cross-domain call information.

11. The apparatus according to claim 9 or 10, wherein the cross-domain data of the first sub-function comprises at least one of the following: a frequency, a delay tolerance, and a data amount of accessing the second zone by the first sub-function.

12. The apparatus according to any one of claims 8 to 11, wherein the apparatus further comprises a determining unit, and the determining unit is configured to:

determine a first dependency relationship of the first function, wherein the first function comprises M sub-functions, the M sub-functions comprise the first sub-function, the first dependency relationship indicates a call relationship between each of the M sub-functions and a second function, and the first function and the second function are deployed in the first zone, wherein

the first dependency relationship is used to control N sub-functions in the M sub-functions to be migrated to the second zone, a security level of the second zone is higher than a security level of the first zone, M is an integer greater than 1, and N is an integer greater than or equal to 1.

**13.** The apparatus according to claim 12, wherein the apparatus further comprises a migration unit, and the migration unit is configured to:
migrate the first sub-function from the first zone to the second zone based on the first dependency relationship and the first cross-domain call information.

**14.** The apparatus according to any one of claims 8 to 13, wherein the apparatus further comprises a marking unit;

the marking unit is configured to mark a cross-domain call application programming interface and/or a cross-domain data access pointer of the first sub-function by using a keyword; and
the generation unit is further configured to generate a scheduling function based on the keyword, wherein the scheduling function is used to adjust a behavior of accessing the second zone by the first sub-function.

**15.** A function migration apparatus, comprising:

a memory, configured to store a computer program; and
a processor, configured to execute the computer program stored in the memory, to enable the apparatus to perform the method according to any one of claims 1 to 7.

**16.** A domain controller, comprising the apparatus according to any one of claims 8 to 15.

**17.** An intelligent driving device, comprising the domain controller according to claim 16 or the apparatus according to any one of claims 8 to 15.

**18.** The intelligent driving device according to claim 17, wherein the intelligent driving device is a vehicle.

**19.** A computer-readable storage medium, wherein the computer-readable storage medium stores instructions, and when the instructions are executed by a processor, the processor is enabled to implement the method according to any one of claims 1 to 7.

**20.** A chip, wherein the chip comprises a circuit, and the circuit is configured to perform the method according to any one of claims 1 to 7.

Zone 1 ⟹ Zone 2

Function X ← Function A    Function A' → Function X'

Function B    Function C    Function B'    Function C'

Function D    Function D'

Function A: function that needs to be migrated
Function X: horizontal dependency function    Function A'/B'/C'/D'/X': function after migration
Function B/C/D: vertical dependency function

FIG. 1

Intelligent driving device 100

Sensing system 120

Computing platform 150

Processor 151    Processor 152    ...    Processor 15n

FIG. 2

EP 4 607 330 A1

FIG. 3(a)

FIG. 3(b)

EP 4 607 330 A1

400

S401: Generate first cross-domain call information, where the first cross-domain call information indicates call information of a first sub-function for a function and/or data in a second zone, the first sub-function belongs to a first function, and the first sub-function is located in a first zone

S402: Store the first cross-domain call information, where the stored first cross-domain call information is used to migrate the first sub-function from the first zone to the second zone

FIG. 4

500

S501: Determine a first dependency relationship of a first function, where the first function includes M sub-functions, the M sub-functions include a first sub-function, the first dependency relationship indicates a call relationship between each of the M sub-functions and a second function, and the first function and the second function are deployed in a first zone of a vehicle-mounted domain controller

S502: Migrate the first sub-function from the first zone to a second zone based on the first dependency relationship and first cross-domain call information

FIG. 5

FIG. 6

EP 4 607 330 A1

Common domain  →  Security domain

Function X  ◄  Function A          Function A'

Function B          Function C          Function C'

Function D

Function A: function that needs to be migrated
Function X: horizontal dependency function, where a
security requirement does not need to be met
Function C: vertical dependency function, where a
security requirement needs to be met
Function B/D: vertical dependency function, where a
security requirement does not need to be met

Function A'/C': function after the function A/C is
migrated to the security domain

FIG. 7

User

Vehicle-mounted domain controller

Determine a to-be-migrated function in the vehicle-mounted domain controller — 801

Determine a dependency relationship of the to-be-migrated function — 802

Determine a dependency relationship of the to-be-migrated function — 802'

Perform initial migration, and migrate the to-be-migrated function from an initial deployment zone to a to-be-migrated-in zone — 803

For a sub-function having a cross-domain call requirement, the vehicle-mounted domain controller records cross-domain data of the sub-function — 804

The vehicle-mounted domain controller determines, based on cross-domain data of each sub-function having the cross-domain call requirement, a sub-function that needs to be migrated to the to-be-migrated-in zone and/or a sub-function that needs to be migrated back from the to-be-migrated-in zone — 805

TO
FIG. 8B

TO
FIG. 8B

FIG. 8A

CONT.
FROM
FIG. 8A

CONT.
FROM
FIG. 8A

Information about the sub-function
that needs to be migrated to the to-
be-migrated-in zone and/or the sub-
function that needs to be migrated
back from the to-be-migrated-in zone

Adjust deployment of the sub-
function
806

Adjust deployment of the sub-
function
806'

FIG. 8B

Apparatus 900

Generation unit 910

Storage unit 920

FIG. 9

Apparatus 1000

Processor
1010

Memory
1030

Transceiver
1020

FIG. 10

## INTERNATIONAL SEARCH REPORT

| International application No. |
|---|
| **PCT/CN2022/132539** |

**A.  CLASSIFICATION OF SUBJECT MATTER**

G06F3/06(2006.01)i

According to International Patent Classification (IPC) or to both national classification and IPC

**B.  FIELDS SEARCHED**

Minimum documentation searched (classification system followed by classification symbols)

G06F，G05B

Documentation searched other than minimum documentation to the extent that such documents are included in the fields searched

Electronic data base consulted during the international search (name of data base and, where practicable, search terms used)

CNTXT, WPABSC, CJFD, CNKI： 功能, 应用, 程序, 调用, 迁移, 控制器, 区域, function+, application, program, call, migrat +, controller, zone

**C.  DOCUMENTS CONSIDERED TO BE RELEVANT**

| Category* | Citation of document, with indication, where appropriate, of the relevant passages | Relevant to claim No. |
|---|---|---|
| A | CN 115328065 A (NUCLEAR POWER INSTITUTE OF CHINA) 11 November 2022 (2022-11-11) description, paragraphs [0032]-[0064], and figures 1-2 | 1-20 |
| A | CN 113867828 A (HUAWEI TECHNOLOGIES CO., LTD.) 31 December 2021 (2021-12-31) entire document | 1-20 |
| A | CN 114095358 A (CHINA SOUTHERN POWER GRID SHENZHEN DIGITAL GRID RESEARCH INSTITUTE CO., LTD. et al.) 25 February 2022 (2022-02-25) entire document | 1-20 |
| A | CN 114265737 A (ALIBABA (CHINA) CO., LTD.) 01 April 2022 (2022-04-01) entire document | 1-20 |
| A | CN 115145472 A (HUAWEI TECHNOLOGIES CO., LTD.) 04 October 2022 (2022-10-04) entire document | 1-20 |
| A | US 2004049553 A1 (HITACHI LTD.) 11 March 2004 (2004-03-11) entire document | 1-20 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 March 2023** | **10 April 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

| International application No. |
| --- |
| **PCT/CN2022/132539** |

| Patent document cited in search report | | | Publication date (day/month/year) | Patent family member(s) | | | Publication date (day/month/year) |
| --- | --- | --- | --- | --- | --- | --- | --- |
| CN | 115328065 | A | 11 November 2022 | None | | | |
| CN | 113867828 | A | 31 December 2021 | WO | 2022001506 | A1 | 06 January 2022 |
| CN | 114095358 | A | 25 February 2022 | None | | | |
| CN | 114265737 | A | 01 April 2022 | None | | | |
| CN | 115145472 | A | 04 October 2022 | WO | 2022206630 | A1 | 06 October 2022 |
| US | 2004049553 | A1 | 11 March 2004 | JP | 2004102374 | A | 02 April 2004 |
| | | | | EP | 1396789 | A2 | 10 March 2004 |

Form PCT/ISA/210 (patent family annex) (July 2022)